# EUROPÄISCHE PATENTANMELDUNG

(11) **EP 0 562 275 A1**
(43) Veröffentlichungstag der Anmeldung: **29.09.1993**
(21) Anmeldenummer: 93102580.3
(22) Anmeldetag: 19.02.1993
(51) Int. Cl.: B60S 1/08, G01N 21/43

(54) **Regensensor**

(30) Priorität: 25.03.1992 DE 4209680
(71) Anmelder: ROBERT BOSCH GMBH, 70442 Stuttgart (DE)
(72) Erfinder: Pientka, Rainer, Dipl.-Phys., W-7590 Achern (DE)

(57) **Zusammenfassung**

Es wird eine Vorrichtung zum Detektieren von Niederschlägen (11) auf einer Scheibe (10) vorgeschlagen, bei der die von einer Strahlungsquelle (15) emittierte Strahlung in einer im wesentlichen innerhalb der Scheibe (10) liegenden optischen Strecke wenigstens einmal reflektiert wird und auf einen Strahlungsempfänger (16) ausgekoppelt wird. Wenigstens im Bereich der einen, auf der niederschlagsfreien Scheibenoberfläche (13) liegenden Reflexionsstelle (22, 24) ist eine die optische Strahlung (17) reflektierende Folie (27) vorgesehen, die auf die Scheibe (10) geklebt ist. Die Folie (27) verhindert die Auswirkungen eines Beschlagens der Scheibenoberfläche (13) auf die in der Scheibe (10) geführten optischen Strahlung (17).

## Beschreibung

### Stand der Technik

Die Erfindung geht aus von einer Vorrichtung zum Detektieren von Niederschlägen auf einer Scheibe nach der Gattung des Hauptanspruchs. Aus der DE-OS 35 32 199 ist ein an der Innenfläche einer Scheibe angeordneter Regensensor bekannt, bei dem die von einer Strahlungsquelle emittierte Strahlung nach einer in der Scheibe mehrfach erfolgenden Totalreflexion einem Strahlungsempfänger zugeleitet wird. Um zu verhindern, daß die Totalreflexion in der Scheibe auf der niederschlagsfreien Innenseite durch ein Beschlagen der Innenfläche der Scheibe aufgehoben wird, ist der zwischen der Strahlungsquelle und dem Strahlungsempfänger liegende Bereich der Scheibeninnenfläche beispielsweise durch eine Abdeckung oder durch Verspiegeln der Innenfläche gegen Beschlagen geschützt. Die Abdeckung wird nicht in allen Betriebssituationen eine ausreichende Funktionssicherheit aufweisen, da unter extremen Temperaturverhältnissen ein Beschlagen nicht zuverlässig verhindert werden kann. Eine Verspiegelung der Innenfläche der Scheibe im Bereich des Regensensors ist relativ teuer.

Der Erfindung liegt die Aufgabe zugrunde, eine Vorrichtung zum Detektieren von Niederschlägen auf einer Scheibe anzugeben, bei der mit einfachen Mitteln negative Auswirkungen durch ein Beschlagen der Innenfläche der Scheibe verhindert werden.

### Vorteile der Erfindung

Erfindungsgemäß ist vorgesehen, daß wenigstens im Bereich der auf der niederschlagsfreien Seite der Scheibe liegenden Reflexionsstelle eine die optische Strahlung reflektierende Folie auf die Scheibenoberfläche geklebt ist. Mit dieser Maßnahme ist eine besonders einfache und preisgünstige Möglichkeit angegeben, eine Auswirkung auf die optische Strahlung durch ein Beschlagen der Innenfläche der Scheibe zu verhindern.

Vorteilhafte Weiterbildungen und Verbesserungen der im Hauptanspruch angegebenen Vorrichtung ergeben sich aus Unteransprüchen.

Besonders einfach ist die Folie als Metallband zu realisieren, dessen Oberfläche die erforderlichen reflektierenden Eigenschaften aufweist. Eine andere preisgünstige Realisierungsmöglichkeit der Folie ist mittels eines Kunststoffbandes möglich, das eine entsprechende Metallbeschichtung aufweist.

Die Folie ist besonders einfach anzubringen, wenn die Folie als Selbstklebefolie ausgebildet ist.

Eine vorteilhafte andere Ausgestaltung ist dadurch gegeben, daß unmittelbar auf die Scheibenoberfläche ein zweiseitig klebendes transparentes Klebeband aufgebracht wird, auf welches anschließend die Folie geklebt wird.

Die erfindungsgemäße Vorrichtung eignet sich insbesondere zur Verwendung bei Kraftfahrzeugscheiben, wobei die Vorrichtung zum Detektieren von Niederschlägen auf einer Scheibe Signale an eine Scheibenwischvorrichtung abgibt, die zum Reinigen der äußeren Scheibenoberfläche vorgesehen ist.

Weitere vorteilhafte Weiterbildungen und Verbesserungen der erfindungsgemäßen Vorrichtung ergeben sich aus weiteren Unteransprüchen in Verbindung mit der folgenden Beschreibung.

### Zeichnung

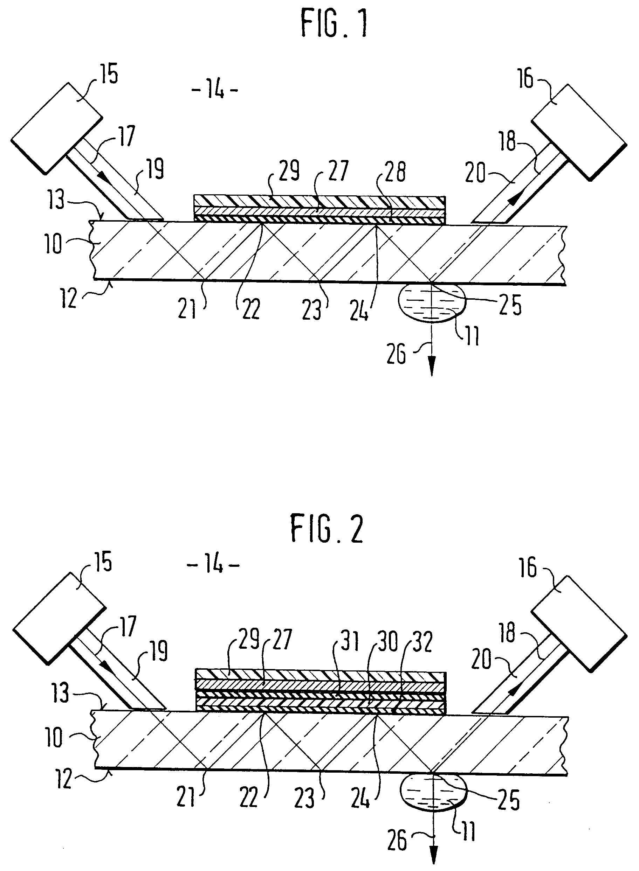

Figur 1 zeigt ein erstes Ausführungsbeispiel einer erfindungsgemäßen Vorrichtung zum Detektieren von Niederschlägen auf einer Scheibe und Figur 2 zeigt ein weiteres Ausführungsbeispiel.

In Figur 1 ist eine Scheibe 10 gezeigt, die eine erste, einem Niederschlag 11 ausgesetzte Scheibenoberfläche 12 sowie eine zweite, niederschlagsfreie Scheibenoberfläche 13 aufweist. Auf der niederschlagsfreien Seite der Scheibe 10 ist ein Regensensor 14 vorgesehen, der wenigstens eine Strahlungsquelle 15 sowie wenigstens einen Strahlungsempfänger 16 enthält. Die von der Strahlungsquelle 15 erzeugte, in die Scheibe 10 einzukoppelnde Strahlung 17 sowie die aus der Scheibe 10 auf den Strahlungsempfänger 16 auszukoppelnde Strahlung 18 ist jeweils in einem Strahlungsleitstück 19, 20 geführt. Der Winkel der einzukoppelnden Strahlung 17 mit der Scheibenoberfläche 12, 13 ist derart gewählt, daß bei trockenen Scheibenoberflächen 12, 13 an in der Scheibe 10 liegenden Reflexionsstellen 21, 22, 23, 24 jeweils Totalreflexion auftritt. An einer Reflexionsstelle 25 ist die Totalreflexion durch den beispielsweise als Wassertropfen vorliegenden Niederschlag 11 aufgehoben, so daß an dieser Reflexionsstelle 25 ein Teil 26 der Strahlung 17 durch den Wassertropfen 11 ausgekoppelt wird. Die Signalschwächung durch die Auskopplung der Teilstrahlung 26 wird mit dem Strahlungsempfänger 16 festgestellt, der ein Ausgangssignal an eine nicht gezeigte Auswerteschaltung abgibt, die ihrerseits Signale abgibt, die das Vorhandensein eines Niederschlags 11 anzeigen.

In Abhängigkeit von den in der Nähe der Scheibenoberflächen 12, 13 vorliegenden Temperaturen sowie in Abhängigkeit von der relativen Luftfeuchtigkeit auf den beiden Seiten kann ein Beschlagen einer der beiden Oberflächen 12, 13 auftreten. Ein Beschlagen der ersten Oberfläche 12 führt dazu, daß an den Reflexionsstellen 21, 23 die Totalreflexion durch die niedergeschlagene Feuchtigkeitsschicht aufgehoben wird und weitere Teile der Strahlung 17 ausgekoppelt werden. Ein Beschlagen der ersten Scheibenoberfläche 12 wird somit als Niederschlag 11 ausgewertet. Ein auf der zweiten Scheibenoberfläche 13 aufgetretenes Beschlagen würde an den Reflexionsstellen 22, 24 zu einer Aufhebung der Totalreflexion und somit jeweils zu einem Auskoppeln von Teilen der Strahlung 17 führen. Dieses Beschlagen soll nicht als Niederschlag 11 ausgewertet werden, so daß dessen Auswirkungen auf die Strahlung 17 verhindert werden müssen. Erfindungsgemäß ist deshalb die Folie 27 vorgesehen, die mittels einer Klebeschicht 28 auf die zweite Scheibenoberfläche 13 wenigstens im Bereich der Reflexionsstellen 22, 24 geklebt ist.

Die Folie 27 weist eine die optische Strahlung 17 reflektierende Oberfläche auf. Eine besonders vorteilhafte Ausgestaltung sieht vor, daß die Reflexionseigenschaft abgestimmt ist auf die Wellenlänge der Strahlung 17. Der besondere Vorteil dieser Maßnahme liegt darin, daß bei Verwendung von unsichtbarer, beispielsweise von Infrarotstrahlung, die reflektierenden Eigenschaften der Folie 27 für einen auf der dem Niederschlag 11 ausgesetzten Seitenscheibe befindlichen Betrachter unauffällig bleiben.

Vorteilhaft ist es, wenn die Klebeschicht 28 bereits vor der Montage auf der Folie 27 aufgebracht ist. Derartige selbstklebende Folien sind preisgünstig erhältlich.

Anstelle einer Folie 27, die vorzugsweise als Metallband ausgebildet ist, eignet sich auch eine Konstruktion mit einem Kunststoffträger 29. Die Folie 27 ist in diesem Ausführungsbeispiel eine Metallbeschichtung des Kunststoffbandes 29, die ihrerseits gegebenenfalls bereits mit der Klebeschicht 28 versehen sein kann.

In Figur 1 sind die Folie 27, die Klebeschicht 28 sowie der Kunststoffträger 29 übertrieben dick eingezeichnet. In der Praxis weisen die einzelnen Schichten 27, 28, 29 Dicken auf, die beispielsweise im Mikrometerbereich liegen.

In Figur 2 ist ein weiteres Ausführungsbeispiel der erfindungsgemäßen Vorrichtung gezeigt. Diejenigen in Figur 2 gezeigten Teile, die mit den in Figur 1 gezeigten Teilen übereinstimmen, tragen jeweils dieselben Bezugszeichen. Der wesentliche Unterschied zwischen den beiden Ausführungsbeispielen gemäß Figur 1 und 2 liegt darin, daß bei dem Ausführungsbeispiel gemäß Figur 2 anstelle der in Figur 1 gezeigten einfachen Klebeschicht 28 ein doppelseitiges Klebeband 30 vorgesehen ist, das auf beiden Oberflächen jeweils eine Klebeschicht 31, 32 trägt. Die Klebeschicht 32 ist unmittelbar mit der zweiten Scheibenoberfläche 13 verbunden. Die Folie 27 wird auf die andere Klebeschicht 31 des doppelseitigen Klebebands 30 geklebt. Auch in diesem Ausführungsbeispiel kann die Folie 27 mit den vorgegebenen Reflexionseigenschaften auf dem Kunststoffträger 29 aufgebracht sein. Das Ausführungsbeispiel gemäß Figur 2 zeigt somit eine alternative Befestigung zu dem in Figur 1 gezeigten Ausführungsbeispiel. Obwohl bei dem Ausführungsbeispiel gemäß Figur 2 ein höherer Materialaufwand erforderlich ist, kann diese Ausführung preisgünstiger sein, wenn beispielsweise die Folie 27 mit guten Reflexionseigenschaften nicht als selbstklebende Folie erhältlich und die Präparation als selbstklebende Folie zu aufwendig ist.

Die erfindungsgemäße Vorrichtung eignet sich insbesondere zur Verwendung in Kraftfahrzeugen zum Detektieren von Niederschlägen auf der Front- und/oder Heckscheibe. Insbesondere bei dieser Anwendung tritt häufig ein Beschlagen der Innenseite der Kraftfahrzeugscheiben bei Umgebungsbedingungen auf, bei denen die Außentemperatur unter der Innentemperatur liegt.

## Patentansprüche

1. Vorrichtung zum Detektieren von Niederschlägen auf einer Scheibe, mit einer zwischen einer Strahlungsquelle und einem Strahlungsempfänger im wesentlichen innerhalb der Scheibe liegenden optischen Strecke, in der die Strahlung wenigstens einmal auf der niederschlagsfreien Scheibenoberfläche reflektiert wird, dadurch gekennzeichnet, daß wenigstens im Bereich der niederschlagsfreien Reflexionsstelle (22, 24) eine von der Strahlungsquelle (15) abgegebene optische Strahlung reflektierende Folie (27) vorgesehen ist, die auf die Scheibe (10) geklebt ist.

2. Vorrichtung nach Anspruch 1, dadurch gekennzeichnet, daß als Folie (27) ein Metallband vorgesehen ist.

3. Vorrichtung nach Anspruch 1, dadurch gekennzeichnet, daß als Folie (27) ein Kunststoffband mit Metallbeschichtung vorgesehen ist.

4. Vorrichtung nach einem der vorhergehenden Ansprüche, dadurch gekennzeichnet, daß die Reflexionseigenschaften abgestimmt sind auf die Wellenlänge der Strahlung 17.

5. Vorrichtung nach einem der vorhergehenden Ansprüche, dadurch gekennzeichnet, daß die Folie (27) als selbstklebende Folie ausgebildet ist.

6. Vorrichtung nach einem der Ansprüche 1 bis 4, dadurch gekennzeichnet, daß die Folie (27) mittels eines doppelseitigen Klebebandes (30) auf die Scheibe (10) geklebt ist.

7. Vorrichtung nach einem der vorhergehenden Ansprüche, gekennzeichnet durch die Verwendung bei Kraftfahrzeugscheiben.
